# EUROPEAN PATENT SPECIFICATION

(11) **EP 3 260 736 B1**
(45) Date of publication and mention of the grant of the patent: **31.03.2021**
(21) Application number: 16752189.7
(22) Date of filing: 21.01.2016
(51) Int. Cl.: B60K 7/00, F16H 1/06, B60L 15/20, F16H 57/021, F16H 57/029, F16H 57/04, H02K 7/116, B60K 17/04, B60K 11/02

(54) **TWO-MOTOR VEHICLE DRIVE DEVICE**
ANTRIEBSVORRICHTUNG FÜR EIN ZWEIMOTORIGES KRAFTFAHRZEUG
DISPOSITIF D'ENTRAÎNEMENT DE VÉHICULE À DEUX MOTEURS

(30) Priority: 19.02.2015 JP 2015030835
(43) Date of publication of application: 27.12.2017
(73) Proprietor: NTN Corporation, Osaka-shi, Osaka 550-0003 (JP)
(72) Inventor: MAKINO, Tomoaki, Iwata-shi Shizuoka 438-8510 (JP); YUKISHIMA, Ryou, Iwata-shi Shizuoka 438-8510 (JP)
(74) Representative: Grünecker Patent- und Rechtsanwälte PartG mbB
(86) International application number: PCT/JP2016/051635
(87) International publication number: WO 2016/132800

(56) References cited:
- WO-A1-2012/096310
- JP-A- 2005 225 425
- JP-A- 2012 178 973
- JP-A- 2012 228 143
- JP-A- 2012 257 347
- US-A1- 2009 133 944
- US-A1- 2014 097 060

## Description

### TECHNICAL FIELD

The present invention relates to a two-motor vehicle-driving apparatus to be mounted above vehicle springs, including two electric motors each for driving one of a left and a right driving wheels of the vehicle independently from each other, and speed reducers.

### BACKGROUND ART

Patent Literature 1, Patent Literature 2 and Patent Literature 3 disclose two-motor vehicle-driving apparatuses, each composed of: two electric motors each for driving one of a left and a right driving wheels independently from each other, and speed reducers.

A two-motor vehicle-driving apparatus of this kind, which has electric motors for driving each of the left and the right driving wheels independently, provides an advantage over a case where driving power from a single electric motor is divided to left and right for driving the left and the right wheels, that the apparatus can provide two times the power and therefore the electric motors can be smaller and lighter.

Also, a two-motor vehicle-driving apparatus provides another advantage that unlike a one-motor vehicle-driving apparatus in which a single electric motor must drive both the left and the right driving wheels, it does not require differential gears and others for dividing the driving power from a single electric motor to left and right.

### CITATION LIST

### PATENT LITERATURE

Patent literature 1: JP-A 2010-48379 Gazette
Patent literature 2: JP-A H11-243664 Gazette
Patent literature 3: US 2014/097060 A1

### SUMMARY OF INVENTION

### TECHNICAL PROBLEM

A conventional two-motor vehicle-driving apparatus such as disclosed in Patent Literature 1 or Patent Literature 2 includes, as shown in Fig. 5 and Fig. 6, electric motors 101L, 101R each for independently driving one of the left and right driving wheels; and speed reducers 102L, 102R each for reducing rotation speed of a corresponding one of the electric motors 101L, 101R.

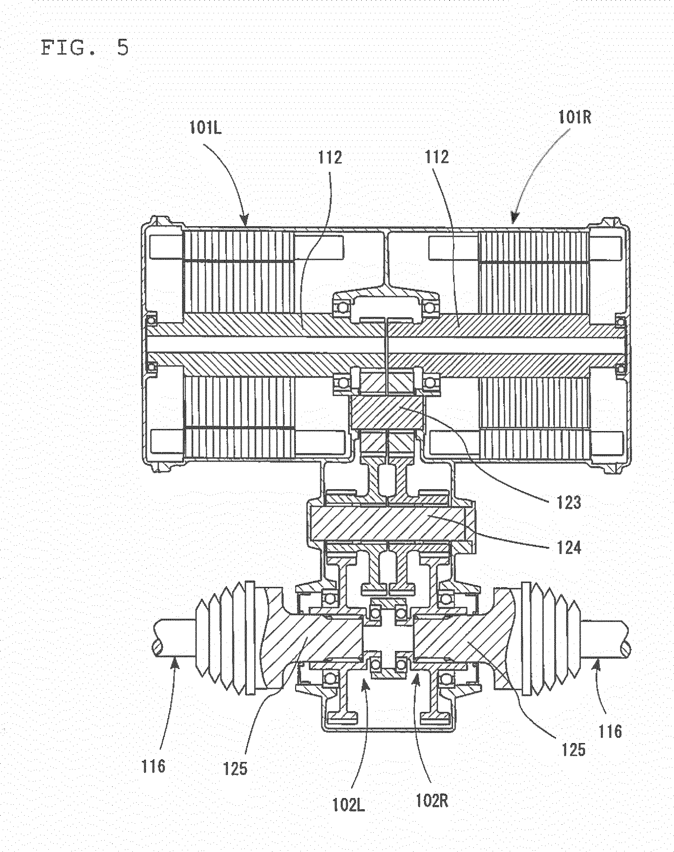

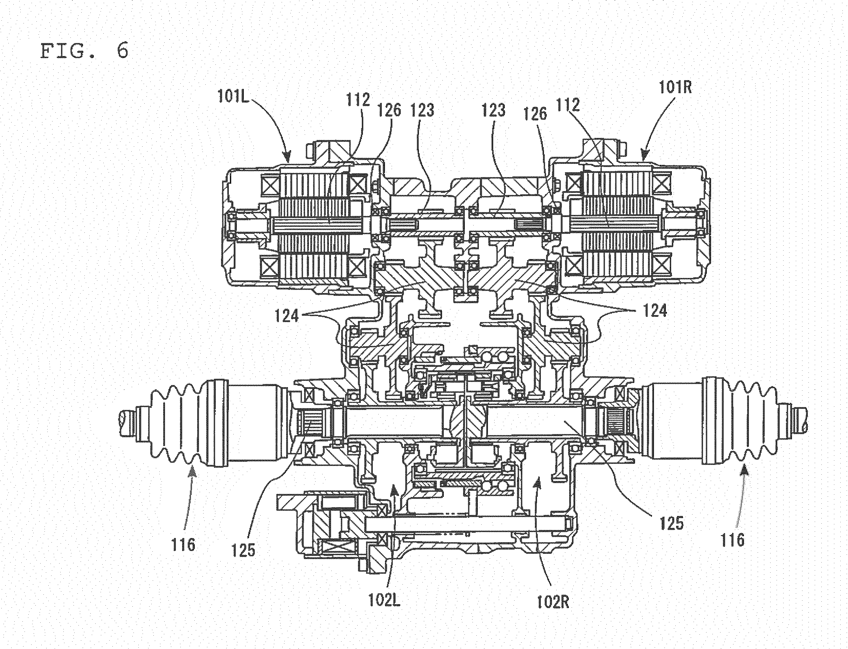

As shown in Fig. 5 and Fig. 6, each of the speed reducers 102L, 102R is provided by a parallel-shaft gear speed reducer in which an input shaft 123 having an input gear for receiving driving power from a motor shaft 112 and an output shaft 125 for transmitting the driving power to the driving wheel via a drive shaft 116 are disposed in parallel with each other in an offset fashion.

Between the input shaft 123 and the output shaft 125 in each of the speed reducers 102L, 102R, one or more intermediate shaft(s) 124 (counter shaft(s)) are provided.

The above-described disposition, in which the motor shaft 112 and the output shaft 125 are parallel with each other and offset from each other, increases the size of the speed reducers 102L, 102R in radial directions, resulting in increased mass of the two-motor vehicle-driving apparatus and decreased mountability onto the vehicle.

Patent Literature 2 discloses a two-motor vehicle-driving apparatus shown in Fig. 6, where motor shafts 112 of the electric motors 101L, 101R and input shafts 123 of the speed reducers 102L, 102R are separate members from each other, each of these shafts is individually supported with bearings, and an oil seal 126 is provided between the motor shaft 112 and a casing. The arrangement has a problem that it increases an axial dimension of the two-motor vehicle-driving apparatus. Although the oil seals 126 are useful in preventing lubricant, which provides lubrication of gears in the speed reducers 102L, 102R, from entering inside the electric motors 101L, 101R, the oil seal 126 has an oil seal lip which makes contact with the motor shaft 112 that is a part which has the fastest rotating speed. This decreases transmission efficiency of the two-motor vehicle-driving apparatus while increasing risk for damage, such as wear and burn of the oil seal lip.

It is therefore an object of the present invention to provide a two-motor vehicle-driving apparatus in which the size of the speed reducers in radial direction is small, the speed reducers require a minimum number of oil seals to seal the lubricant filled in the speed reducers, and the oil seal makes contact only with the slowest rotating shafts.

### SOLUTION TO PROBLEM

In order to solve the above-described problems, the present invention provides a two-motor vehicle-driving apparatus including: two electric motors for driving a left and a right wheel respectively; and two speed reducers for reducing motor rotation of respective electric motors. The two electric motors are disposed at locations closer to the respective wheels relative to the speed reducers. With the above arrangement, a motor shaft of the electric motor has an axial-through hollow structure. The motor shaft is provided with an input gear integrally therewith at its end closer to the speed reducer, with an output shaft provided inside the hollow motor shaft coaxially therewith. The output shaft has an output gear integrally therewith at its end closer to the speed reducer. The speed reducer is provided with one or more intermediate shafts rotatably in parallel with the motor shaft and the output shaft, and the intermediate shaft(s) is (are) provided with a plurality of gears integrally therewith for engagement with the input gear of the motor shaft and with the output gear of the output shaft to transmit rotation of the motor shaft to the output shaft at a reduced speed.

### ADVANTAGEOUS EFFECTS OF INVENTION

According to the present invention, by providing the output shaft inside the hollow motor shaft coaxially therewith as described above, it is possible to decrease the size of the speed reducer in its radial direction.

Also, with an arrangement that the output shaft, which is disposed inside the hollow motor shaft coaxially therewith, has its end extending out of an opening in an outboard wall of a motor casing which houses the electric motor; and sealing is provided between the output shaft and the motor casing by an oil seal, it is possible to minimize the number of oil seals to seal lubricant filled in the speed reducer, and to provide a structure where the oil seal makes contact only with the slowest rotating shaft.

All of the gears inside the speed reducer are provided by external gears. This makes it possible to provide lubrication by splashing lubricant with gears from a bottom reservoir in an inside space of the speed reducer.

The output shaft is formed, inside therein, with an axial oil path which has an opening on a side closer to the speed reducer (inboard side of the apparatus). Further, one or more radial oil paths are formed to provide communication between the axial oil path and an outer circumferential regions near a bearing which supports the output shaft. The above arrangement makes it possible that lubricant, which follows wall surfaces of the speed reducer casing and enters the inside space of the output shaft, is carried centrifugally to near the bearings through the radial oil paths by the rotation of the output shaft. The arrangement makes it possible to prevent damage on the bearings and the oil seals which are disposed at the outboard end regions.

### BRIEF DESCRIPTION OF DRAWINGS

Fig. 1 is a cross-sectional plan view which shows an embodiment of a two-motor vehicle-driving apparatus according to the present invention.
Fig. 2 is a cross-sectional plan view which shows an enlarged portion of Fig. 1.
Fig. 3 is a sectional view taken in lines III-III in Fig. 1.
Fig. 4 is a schematic plan view which shows an electric vehicle mounted with the two-motor vehicle-driving apparatus according to the present invention.
Fig. 5 is a cross-sectional plan view which shows a conventional two-motor vehicle-driving apparatus.
Fig. 6 is a cross-sectional plan view which shows another conventional two-motor vehicle-driving apparatus.

### DESCRIPTION OF EMBODIMENTS

Hereinafter, embodiments of the present invention will be described based on the attached drawings.

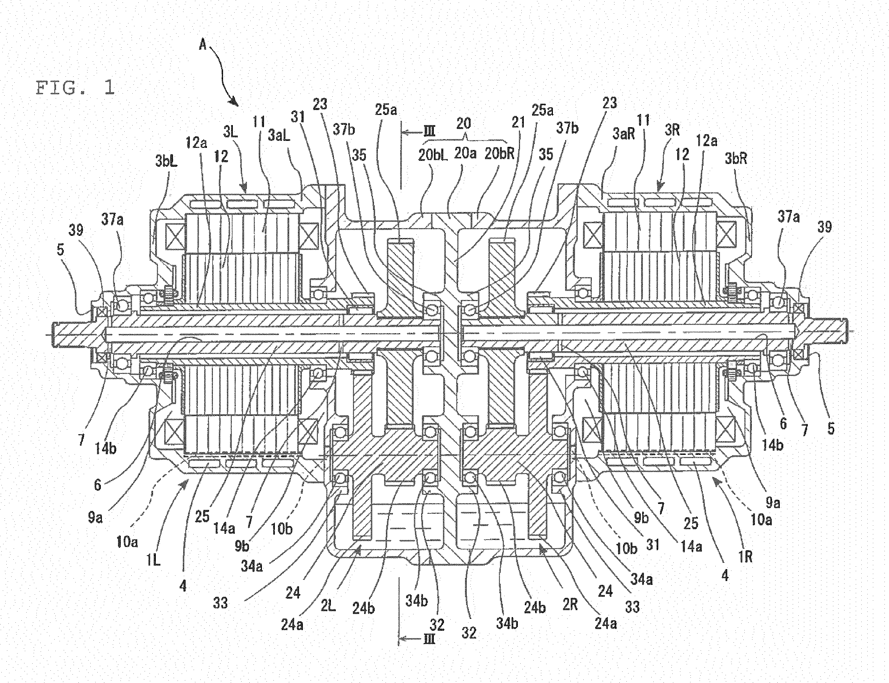

As shown in Fig. 1, a two-motor vehicle-driving apparatus A according to the present invention utilizes a structure that a speed reducer casing 20, which houses two speed reducers 2L, 2R provided side by side on left and right, is disposed at a center; and motor casings 3L, 3R of two electric motors 1L, 1R are fixed to a left side and a right side respectively of the speed reducer casing 20.

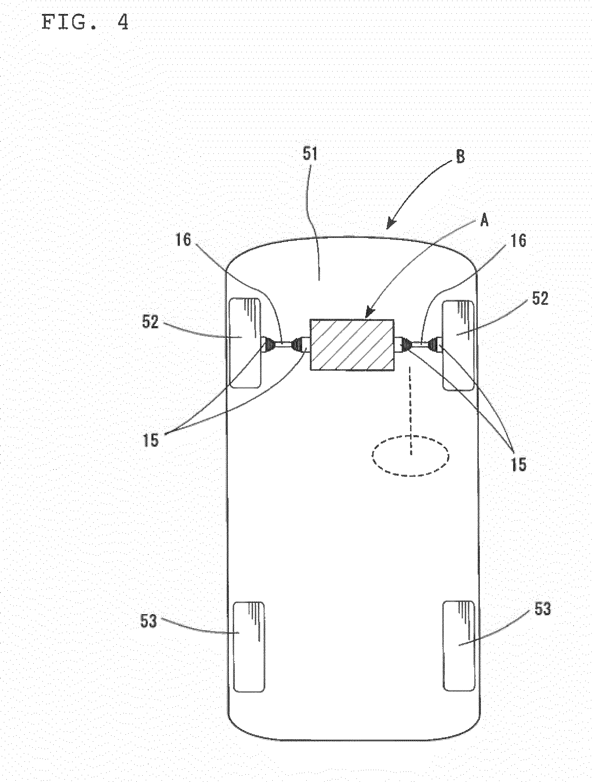

As shown in Fig. 4, an electric vehicle B according to the present invention includes a chassis 51; front wheels 52 as driving wheels; rear wheels 53; and the two-motor vehicle-driving apparatus A which drives the left and the right front wheels 52 independently from each other. The two-motor vehicle-driving apparatus A is mounted on the chassis 51, at a center position between the left and the right front wheels 52. Driving power from the two-motor vehicle-driving apparatus A are transmitted to the left and the right front wheels 52 via constant velocity joints 15 and drive shafts 16.

The two-motor vehicle-driving apparatus A may be utilized in whichever of a front-wheel driving method as shown in Fig. 4, a rear-wheel drive method and a four-wheel drive method.

As shown in Fig. 1, the speed reducer casing 20, which houses the two speed reducers 2L, 2R provided side by side on left and right, has a three-piece structure, including a center casing 20a, and a left and a right side casings 20bL, 20bR which are fixed to respective sides of the center casing 20a.

As shown in Fig. 1, the left and the right electric motors 1L, 1R in the two-motor vehicle-driving apparatus A according to the present invention are housed in the motor casings 3L, 3R.

The motor casings 3L, 3R respectively have cylindrical motor casing main bodies 3aL, 3aR, and outboard walls 3bL, 3bR which close outboard side faces of the motor casing main bodies 3aL, 3aR. Each of the outboard walls 3bL, 3bR is provided with an opening 5 for an output shaft 25, which will be described later, to extend therefrom. Also, inboard faces of the motor casing main bodies 3aL, 3aR, which are close to the respective speed reducers 2L, 2R are closed by the side casings 20bL, 20bR of the speed reducer casing 20.

The motor casing main bodies 3aL, 3aR are provided with cooling piping 4, and the piping 4 is supplied with coolant from a radiator (not illustrated). The piping 4 constitutes so called water jacket, whereby the electric motors 1L, 1R are effectively cooled.

As shown in Fig. 1, the electric motors 1L, 1R are provided by radial gap motors wherein each of the motor casing main bodies 3aL, 3aR has their inner circumferential surface provided with a stator 11, and the stator 11 has its inner circumference provided with a rotor 12 at a distance.

The rotor 12 has a motor shaft 12a at its center. The motor shaft 12a has an axial-through hollow structure, and each motor shaft 12a has an end penetrating corresponding one of the side casings 20bL, 20bR of the speed reducer casing 20, and inserted into the speed reducer casing 20. The end of the motor shaft 12a inside the speed reducer casing 20 has its outer circumferential surface provided with an input gear 23.

In the embodiment in Fig. 1, the input gear 23 is formed integrally with the motor shaft 12a, at an end thereof, on an outer circumferential surface thereof; however, the input gear 23 may be fitted around the motor shaft 12a by means of splines for example.

The motor shafts 12a are rotatably supported by the outboard walls 3bL, 3bR of the motor casings 3L, 3R and the side casings 20bL, 20bR of the speed reducer casing 20 via rolling bearings 14a, 14b (Fig. 1).

Inside the hollow motor shaft 12a, an output shaft 25 is disposed coaxially therewith.

The output shaft 25 has a large-diameter output gear 25a inside the speed reducer casing 20, and is rotatably supported by the opening 5 in a corresponding one of the outboard walls 3bL, 3bR of the motor casings 3L, 3R and a boss portion 35 formed on both surfaces of a partition wall 21 of the center casing 20a, via rolling bearings 37a, 37b. The output gear 25a is spline-connected to the output shaft 25.

On an outside of each of the rolling bearings 37a, 37 which support the output shaft 25 rotatably, an oil seal 39 is provided for sealing between the output shaft 25 and the opening 5 in each of the outboard walls 3bL, 3bR of the motor casings 3L, 3R.

As shown in Fig. 4, the output shaft 25 has its outboard end region fitted with a constant velocity joints 15, for transmission of driving power to the wheel 52 via a drive shaft 16.

If there is a wide interval between the two rolling bearings 37a, 37b which support the output shaft 25 at its ends, the output shaft 25 tends to deflect excessively, potentially affecting durability of the gear and vibration characteristics. With this in mind, for reduced deflection of the shaft by increasing support rigidity of the output shaft 25, a support bearing 31 is provided on an inner circumferential region inside the hollow motor shaft 12a for supporting the output shaft 25 with respect to the motor shaft 12a.

The support bearing 31 is provided by a cylindrical roller bearing. Also, in Fig. 1, the support bearing 31 rotatably supports the output shaft 25 on an inner circumferential side of the input gear 23. The arrangement is effective in not adversely affecting the input gear 23 in terms of durability and vibration characteristics.

In the embodiment described above, the support bearing 31 is provided by a cylindrical roller bearing; however, this is not limiting. For example, slide bearing, deep groove ball bearing, tapered roller bearing, needle roller bearing, self-aligning roller bearing, angular contact ball bearing, four-point contact ball bearing, and any other type, whether it is a slide bearing or a rolling bearing, or whether their rolling elements are rollers or balls, or whether the bearing is a single-row type or a double-row type, is applicable. Likewise, any of the bearings disposed in other locations may be provided by whatsoever type.

One of the support bearing 31 and the rolling bearings 37a, 37b of the output shaft 25 may be eliminated if the elimination still ensures satisfactory support rigidity.

Each of the speed reducers 2L, 2R is provided with one or more intermediate shafts 24 rotatably in parallel with the motor shaft 12a and the output shaft 25. The intermediate shaft 24 is provided with a plurality of gears integrally therewith, and these gears engage with the input gear 23 of the motor shaft 12a and the output gear 25a of the output shaft 25, to slow rotation of the motor shaft 12a before the rotation is transmitted to the output shaft 25.

The intermediate shaft 24 is provided by a stepped gear which has, on its outer circumferential surface, a large-diameter gear 24a for engagement with the input gear 23, and a small-diameter gear 24b for engagement with the output gear 25a. The intermediate shaft 24 is supported, at its two ends, by a boss portion 32 formed in each surface of the partition wall 21 of the center casing 20a and by a boss portion 33 formed in each of the side casings 20bL, 20bR, via rolling bearings 34a, 34b.

All gears inside the speed reducer casing 20 are provided by external gears, and these gears and bearings inside the speed reducer casing 20 are lubricated by splashing lubricant with gears from a bottom reservoir in the inside space of the speed reducer casing 20.

Further, for sufficient lubrication of the rolling bearings 14a, 14b, 37a and the oil seals 39 provided at the outboard end regions of the motor casings 3L, 3R, lubricant is supplied from an axial center of the output shaft 25.

Specifically, the output shaft 25 is formed, inside thereof, with an axial oil path 6 opening at the side of the speed reducer casing 20 (inboard side of the apparatus). Further, radial oil paths 7 are formed to provide communication from the axial oil path 6 to outer circumferential regions near the rolling bearing 37a and the support bearing 31 which support the output shaft 25. Lubricant, which follows wall surfaces of the speed reducer casing and enters the inside space of the output shaft, is carried centrifugally to near the bearings through the radial oil paths by the rotation of the output shaft. This lubrication method by means of the axial oil paths 6 and the radial oil paths 7 makes it possible to prevent damage on the bearings and the oil seals 39 which are disposed at the outboard end regions.

Though not illustrated, lubricant is supplied to the axial oil path 6 with flowing down on the partition wall 21 after splashed with gears from a bottom reservoir in the inside space of the speed reducer casing 20.

If the lubricant which enters inside the motor casings 3L, 3R is not discharged sufficiently, oil level inside the motor casings 3L, 3R rises, resulting in increase in oil agitation loss by the rotor 12. For appropriate discharge of the lubricant from inside the motor casings 3L, 3R to the side of the speed reducer casing 20, the following structure is employed.

Inside the motor casings 3L, 3R is axially divided by the stator 11 and the rotor 12 into two spaces 9a, 9b.

An oil path which provides communication between these two spaces 9a, 9b is provided near the lowest region (Bottom Dead Center) of the stator 11. For example, an axially groove 10a is provided on an outer circumference of the stator 11 or on an inner circumference of each motor casings 3L, 3R, as the path which provides communication between the spaces 9a, 9b.

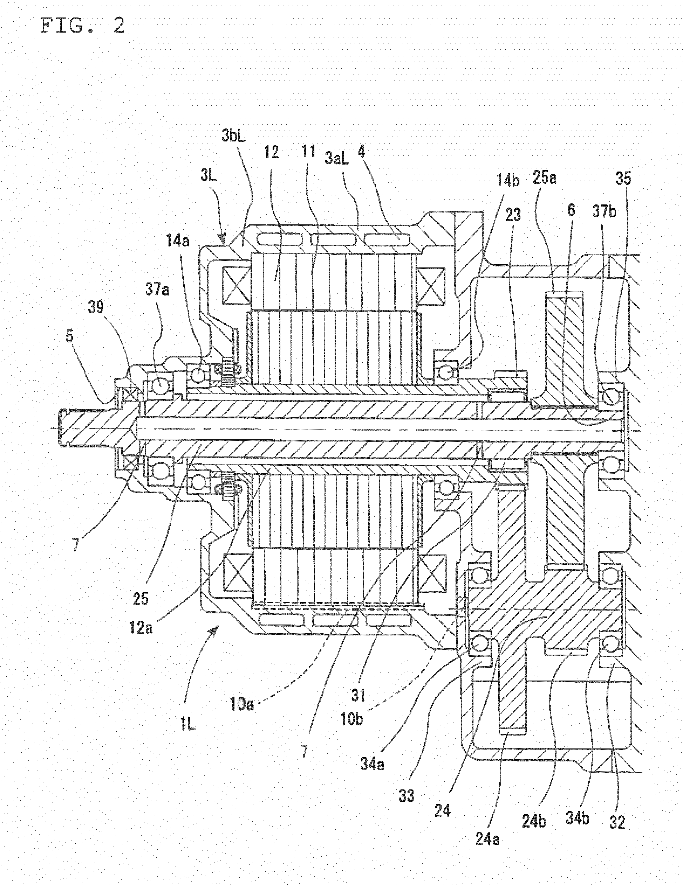

Also, a through oil path 10b is provided in each of the side casings 20bL, 20bR which separate the motor casings 3L, 3R from the speed reducer casing 20. As shown in Fig. 2, these through oil paths 10b are at a lower position than the lowest region (Bottom Dead Center) of the rotor 12.

The axial grooves 10a serving as the paths which provide communication between the spaces 9a, 9b, and the through oil paths 10b which are at a lower position than the lowest point (Bottom Dead Center) of the rotors 12 allow lubricant which is supplied to the bearings and the oil seals 39 disposed at the outboard ends to move from the spaces 9a to the spaces 9b in the motor casings 3L, 3R, and then to return into the speed reducer casing 20 without being splashed by the rotor 12.

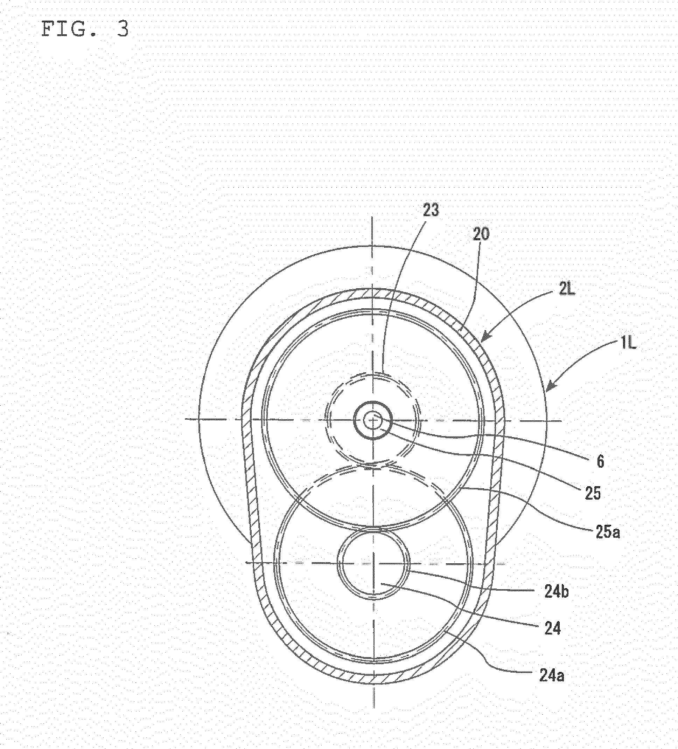

Fig. 3 is a sectional view taken in lines III-III in Fig. 1. As shown in Fig. 3, rotation is transmitted from the input gear 23 to the large-diameter gear 24a of the intermediate shaft 24, and then from the small-diameter gear 24b of the intermediate shaft to the output gear 25a which is on the output shaft 25, whereby rotation of the electric motors 1L, 1R is slowed and transmitted to the output shafts 25, to drive the wheels 52 at a large torque. Since all of the input gear 23, the large-diameter gear 24a, the small-diameter gear 24b and the output gear 25a are provided by external gears, it is possible to provide lubrication by splashing lubricant with gears from the bottom reservoir in an inside space of the speed reducer. In addition, since external gears are easy to manufacture, it is possible to decrease cost of the two-motor vehicle-driving apparatus.

The present invention is in no way limited by the embodiments described above, and is needless to say possible to implement in various other ways within the scope of the present invention as defined by the appended claims.

### REFERENCE SIGNS LIST

- 1L, 1R:: Electric Motors
- 2L, 2R:: Speed Reducers
- 3L, 3R:: Motor Casings
- 3aL, 3aR:: Motor Casing Main Bodies
- 3bL, 3bR:: Outboard Walls
- 4:: Pipe
- 5:: Opening
- 6:: Axial Oil Path
- 7:: Radial Oil Path
- 9a, 9b:: Spaces
- 10a:: Axially Groove
- 10b:: Through oil path
- 11:: Stator
- 12:: Rotor
- 12a:: Motor Shaft
- 14a, 14b:: Rolling Bearings
- 15:: Constant Velocity Joints
- 16:: Drive Shaft
- 20:: Speed Reducer Casing
- 20a:: Center Casing
- 20bL, 20bR:: Side Casings
- 21:: Partition Wall
- 23:: Input Gear
- 24:: Intermediate Shaft
- 24a:: Large-Diameter Gear
- 24b:: Small-Diameter Gear
- 25:: Output Shaft
- 25a:: Output Gear
- 31:: Support Bearing
- 32:: Boss Portion
- 33:: Boss Portion
- 34a, 34b:: Rolling Bearings
- 35:: Boss Portion
- 37a:: Rolling Bearing
- 37b:: Rolling Bearing
- 39:: Oil Seal
- 51:: Chassis
- 52:: Front Wheel
- 53:: Rear Wheel
- A:: Two-Motor Vehicle-Driving Apparatus
- B:: Electric Vehicle

## Claims

1. A two-motor vehicle-driving apparatus comprising two electric motors (1L, 1R) for driving a left and a right wheel respectively; and two speed reducers (2L, 2R) for reducing motor rotation of the respective electric motors (1L, 1R); the two electric motors (1L, 1R) being disposed at locations closer to the respective wheels relative to the speed reducers (2L, 2R), wherein a motor shaft (12a) of the electric motor (1L, 1R) has an axial-through hollow structure; the motor shaft (12a) is provided with an input gear (23) integrally therewith at its end closer to the speed reducer (2L, 2R), with an output shaft (25) provided inside the hollow motor shaft (12a) coaxially therewith; **characterized in that**
the output shaft (25) has an output gear (25a) integrally therewith at its end closer to the speed reducer (2L, 2R); the speed reducer (2L, 2R) is provided with one or more intermediate shafts (24) rotatably in parallel with the motor shaft (12a) and the output shaft (25); the intermediate shaft (24) is provided with a plurality of gears (24a, 24b) integrally therewith for engagement with the input gear (23) of the motor shaft (12a) and with the output gear (25a) of the output shaft (25) to transmit rotation of the motor shaft (12a) to the output shaft (25) at a reduced speed.

2. The two-motor vehicle-driving apparatus according to Claim 1, wherein the output shaft (25), which is disposed inside the hollow motor shaft (12a) coaxially therewith, has its end extending out of an opening in an outboard wall (3bL, 3bR) of a motor casing (3L, 3R) which houses the electric motor (1R, 1L); and sealing is provided between the output shaft (25) and the opening of the motor casing (3L, 3R) by an oil seal (39).

3. The two-motor vehicle-driving apparatus according to Claim 1, wherein all of the gears (23, 24a, 24b, 25a) inside the speed reducer (2L, 2R) are provided by external gears.

4. The two-motor vehicle-driving apparatus according to one of Claims 1 through 3, wherein the output shaft (25) is formed, inside therein, with an axial oil path (6) which has an opening on a side closer to the speed reducer (2L, 2R); and further with one or more radial oil paths (7) which provide communication between the axial oil path (6) and an outer circumference of the shaft (25).

5. The two-motor vehicle-driving apparatus according to one of Claims 1 through 4, wherein electric motor's stator (11) and rotor (12) axially divide inside space (9a, 9b) of the motor casing (3L, 3R); and an oil path (10a) which provides communication between the divided spaces (9a, 9b) is formed on an outer circumference of the stator (11) or on an inner circumferential region of the motor casing (3L, 3R) where the stator (11) is fitted.

6. The two-motor vehicle-driving apparatus according to one of Claims 1 through 5, wherein the electric motor (1L, 1R) is housed in the motor casing (3L, 3R) whereas the speed reducer (2L, 2R) is housed in a speed reducer casing (20); the two casings (3L, 3R, 20) are separated by a wall; and the wall surface is provided with a through oil path (10b) which provides communication between the motor casing (3L, 3R) and the speed reducer casing (20), at a lower position than a lowest portion of the rotor (12).

## Patentansprüche

1. Zweimotorige Fahrzeugantriebsvorrichtung, umfassend zwei Elektromotoren (1L, 1R) zum Antreiben eines rechten beziehungsweise eines linken Rads; und zwei Drehzahlminderer (2L, 2R) zur Verringerung einer Motordrehung der jeweiligen Elektromotoren (1L, 1R); wobei die zwei Elektromotoren (1L, 1R) bezüglich der Drehzahlminderer (2L, 2R) an Stellen angeordnet sind, die sich näher an den jeweiligen Rädern befinden, wobei eine Motorwelle (12a) des Elektromotors (1L, 1R) einen axial durchgehenden hohlen Aufbau aufweist; wobei die Motorwelle (12a) an ihrem Ende, das sich näher an dem Drehzahlminderer (2L, 2R) befindet, mit einem Antriebszahnrad (23) einstückig damit ausgestattet ist, wobei eine Ausgangswelle (25) innerhalb der hohlen Motorwelle (12 a) koaxial dazu bereitgestellt ist;
**dadurch gekennzeichnet, dass**
die Ausgangswelle (25) ein Ausgangszahnrad (25a) einstückig damit an ihrem Ende aufweist, das sich näher an dem Drehzahlminderer (2L, 2R) befindet; der Drehzahlminderer (2L, 2R) mit einer oder mehreren Zwischenwellen (24) drehbar parallel zu der Motorwelle (12a) und der Ausgangswelle (25) ausgestattet ist; die Zwischenwelle (24) mit einer Vielzahl von Zahnrädern (24a, 24b) einstückig damit zum Eingriff mit dem Eingangszahnrad (23) der Motorwelle (12a) und mit dem Ausgangszahnrad (25a) der Ausgangswelle (25) ausgestattet ist, um eine Drehung der Motorwelle (12a) mit einer verringerten Geschwindigkeit an die Ausgangswelle (25) zu übertragen.

2. Die zweimotorige Fahrzeugantriebsvorrichtung gemäß Anspruch 1, wobei die Ausgangswelle (25), die innerhalb der hohlen Motorwelle (12a) koaxial dazu angeordnet ist, ihr Ende aus einer Öffnung in einer Außenwand (3bL, 3bR) eines Motorgehäuses (3L, 3R), welches den Elektromotor (1R, 1L) aufnimmt, erstreckt; und eine Dichtung zwischen der Ausgangswelle (25) und der Öffnung des Motorgehäuses (3L, 3R) durch eine Öldichtung (39) bereitgestellt ist.

3. Die zweimotorige Fahrzeugantriebsvorrichtung gemäß Anspruch 1, wobei alle Zahnräder (23, 24a, 24b, 25a) innerhalb des Drehzahlminderers (2L, 2R) durch außenverzahnte Räder bereitgestellt sind.

4. Die zweimotorige Fahrzeugantriebsvorrichtung gemäß einem der Ansprüche 1 bis 3, wobei die Ausgangswelle (25) innerhalb darin mit einem axialen Ölweg (6) ausgebildet ist, der eine Öffnung auf einer Seite näher an dem Drehzahlminderer (2L, 2R) aufweist; und ferner mit einem oder mehreren radialen Ölwegen (7), die eine Verbindung zwischen dem axialen Ölweg (6) und einem Außenumfang der Welle (25) bereitstellen.

5. Die zweimotorige Fahrzeugantriebsvorrichtung gemäß einem der Ansprüche 1 bis 4, wobei ein Stator (11) und Rotor (12) des Elektromotors einen Innenraum (9a, 9b) des Motorgehäuses (3L, 3R) in axialer Richtung teilen; und ein Ölweg (10a), der eine Verbindung zwischen den geteilten Räumen (9a, 9b) bereitstellt, auf einem Außenumfang des Stators (11) oder auf einem Innenumfangsbereich des Motorgehäuses (3L, 3R), wo der Stator (11) montiert ist, ausgebildet ist.

6. Die zweimotorige Fahrzeugantriebsvorrichtung gemäß einem der Ansprüche 1 bis 5, wobei der Elektromotor (1L, 1R) in dem Motorgehäuse (3L, 3R) aufgenommen ist, wohingegen der Drehzahlminderer (2L, 2R) in einem Drehzahlminderer-Gehäuse (20) aufgenommen ist; die zwei Gehäuse (3L, 3R, 20) von einer Wand getrennt werden; und die Wandfläche mit einem Durchgangsölweg (10b) ausgestattet ist, der eine Verbindung zwischen dem Motorgehäuse (3L, 3R) und dem Drehzahlminderer-Gehäuse (20), an einer Position bereitstellt, die niedriger als ein unterster Abschnitt des Rotors (12) ist.

## Revendications

1. Appareil d'entraînement de véhicule à deux moteurs comprenant deux moteurs électriques (1L, 1R) pour entraîner respectivement une roue gauche et une roue droite; et deux réducteurs de vitesse (2L, 2R) pour réduire la rotation des moteurs électriques respectifs (1L, 1R); les deux moteurs électriques (1L, 1R) étant disposés à des emplacements plus proches des roues respectives par rapport aux réducteurs de vitesse (2L, 2R), dans lequel un arbre moteur (12a) du moteur électrique (1L, 1R) a une structure creuse traversante axiale; l'arbre moteur (12a) est pourvu d'un engrenage d'entrée (23) d'un seul tenant avec lui à son extrémité la plus proche du réducteur de vitesse (2L, 2R), avec un arbre de sortie (25) prévu à l'intérieur de l'arbre moteur creux (12a) coaxialement à celui-ci;
**caractérisé en ce que**
l'arbre de sortie (25) comporte un engrenage de sortie (25a) qui en fait partie intégrante à son extrémité la plus proche du réducteur de vitesse (2L, 2R); le réducteur de vitesse (2L, 2R) est muni d'un ou plusieurs arbres intermédiaires (24) tournant parallèlement à l'arbre moteur (12a) et à l'arbre de sortie (25); l'arbre intermédiaire (24) est pourvu d'une pluralité d'engrenages (24a, 24b) faisant partie intégrante de celui-ci pour s'engager avec l'engrenage d'entrée (23) de l'arbre moteur (12a) et avec l'engrenage de sortie (25a) de l'arbre de sortie (25) pour transmettre la rotation de l'arbre moteur (12a) à l'arbre de sortie (25) à une vitesse réduite.

2. Appareil d'entraînement de véhicule à deux moteurs selon la revendication 1, dans lequel l'arbre de sortie (25), qui est disposé à l'intérieur de l'arbre creux (12a) du moteur coaxialement à celui-ci, sort par son extrémité d'une ouverture dans une paroi extérieure (3bL, 3bR) d'un carter de moteur (3L, 3R) qui abrite le moteur électrique (1R, 1L) ; et un joint d'étanchéité à l'huile (39) est prévu entre l'arbre de sortie (25) et l'ouverture du carter de moteur (3L, 3R).

3. Appareil d'entraînement de véhicule à deux moteurs selon la revendication 1, dans lequel tous les engrenages (23, 24a, 24b, 25a) à l'intérieur du réducteur de vitesse (2L, 2R) sont fournis par des engrenages externes.

4. Appareil d'entraînement de véhicule à deux moteurs selon l'une des revendications 1 à 3, dans lequel l'arbre de sortie (25) est formé, à l'intérieur de celui-ci, avec un chemin d'huile axial (6) qui a une ouverture sur un côté plus proche du réducteur de vitesse (2L, 2R); et en outre avec un ou plusieurs chemins d'huile radiaux (7) qui assurent la communication entre le chemin d'huile axial (6) et une circonférence extérieure de l'arbre (25).

5. Appareil d'entraînement de véhicule à deux moteurs selon l'une des revendications 1 à 4, dans lequel le stator (11) et le rotor (12) du moteur électrique divisent axialement l'espace intérieur (9a, 9b) du carter du moteur (3L, 3R) ; et un chemin d'huile (10a) qui assure la communication entre les espaces divisés (9a, 9b) est formé sur une circonférence extérieure du stator (11) ou sur une région circonférentielle intérieure du carter du moteur (3L, 3R) où le stator (11) est monté.

6. Appareil d'entraînement de véhicule à deux moteurs selon l'une des revendications 1 à 5, dans lequel le moteur électrique (1L, 1R) est logé dans le carter du moteur (3L, 3R) tandis que le réducteur de vitesse (2L, 2R) est logé dans un carter de réducteur de vitesse (20); les deux boîtiers (3L, 3R, 20) sont séparés par une paroi ; et la surface de la paroi est pourvue d'un chemin d'huile traversant (10b) qui assure la communication entre le boîtier du moteur (3L, 3R) et le boîtier du réducteur de vitesse (20), à une position plus basse qu'une partie la plus basse du rotor (12).
